# EUROPEAN PATENT APPLICATION

(11) **EP 4 477 490 A1**
(43) Date of publication of application: **18.12.2024**
(21) Application number: 23179173.2
(22) Date of filing: 14.06.2023
(51) Int. Cl.: B61D 17/04, B61D 17/10, B64C 1/12, B64C 1/18, B64D 11/06, E04C 2/34

(54) **PANEL WITH ATTACHMENT SOCKETS FOR AN INTERIOR OF A VEHICLE**

(71) Applicant: Airbus Operations GmbH, 21129 Hamburg (DE)
(72) Inventor: Hegenbart, Matthias, 21129 Hamburg (DE); Benthien, Hermann, 21129 Hamburg (DE)

(57) **Abstract**

The present invention relates to a panel with attachments sockets for an interior of a vehicle (10). The panel (100) comprises a first layer (110) and a second layer (120) coupled to each other. A plurality of attachment sockets (112, 122) is formed in a two-dimensional grid pattern in at least one of the first layer (110) and the second layer (120). Each of the plurality of attachment sockets (112, 122) comprises a cavity (112A, 122A) open to an outer side of the respective layer (110, 120) and extending into a space between the first layer (110) and the second layer (120), the cavity (112A, 122A) comprising at least one bearing surface (112B, 122B).

## Description

### TECHNICAL FIELD OF THE INVENTION

The present invention relates to a panel for an interior of a vehicle. Further, the present invention relates to a system comprising such panel. Furthermore, the present invention relates to a method for providing such panel. In addition, the present invention relates to a vehicle comprising such panel and/or system.

### TECHNICAL BACKGROUND

A panel may be used in an interior of a vehicle, such as a rail vehicle, an aircraft, spacecraft, a motor vehicle, or the like, for example as a cladding panel. This may be installed at a floor, a wall, e.g. side wall, or a ceiling of the vehicle. For example, in case of a floor panel, such panel may be screwed on top of a seat rail to which seat studs may be attached. Further, such panel may have a sandwich structure or honeycomb structure.

By way of example, document US 2014/0318701 A1 describes a sandwich panel with a honeycomb-shaped core structure.

Further, by way of example, document EP 4 122 827 A1 describes a seat rail system for an interior of a vehicle. A floor panel may be applied, e.g. attached, to this seat rail system. When applying the above-mentioned panel with honeycomb-shaped core structure to such seal rail system, load introduction into the floor panel demands attention, as the honeycomb-shaped core structure may to be omitted in sections for this purpose.

### SUMMARY OF THE INVENTION

It is therefore an object of the present invention to provide a panel with a different internal structure and/or core structure to be used in an interior of a vehicle.

This object is solved by the subject-matter of the appended independent claims. Further embodiments are defined in the appended dependent claims.

According to a first aspect, there is provided a panel for an interior of a vehicle. The panel comprises a first layer. Further, the panel comprises a second layer. The first layer and the second layer are coupled to each other. A plurality of attachment sockets is formed in a two-dimensional grid pattern in at least one of the first layer and the second layer. The plurality of attachment sockets each comprises a cavity open to an outer side of the respective layer. The respective cavity extends into a space between the first layer and the second layer. The respective cavity comprises at least one bearing surface.

The proposed panel has several positive features. For example, the panel may replace or may be used instead of a reinforced panel, a, honeycomb panel, etc., as the plurality of attachment sockets, and particularly their respective cavity extending between the first layer and the second layer, form a core and/or reinforcement providing a high bending stiffness to the panel. That is, the respective cavity of the plurality of attachment sockets is formed into the inner of the panel. This makes the panel rigid. At the same time, the plurality of attachment sockets may serve as respective attachment and/or coupling means for a plurality of counter elements, counter structures, interior equipment of the vehicle, or the like. In particular, the respective at least one bearing surface may serve, i.e. it may be configured, to attach and/or couple a corresponding counter element, counter structure, or the like thereto. Each of the plurality of attachment sockets may serve to introduce a load into the panel and/or to attach the panel to another member, such as a structural member of the vehicle. Arranging the plurality of attachment sockets in the two-dimensional grid pattern, with respect to a two-dimensional extension of the panel and/or the at least one of the first layer and the second layer perpendicular to a thickness direction of the panel and/or the layer structure, allows high flexibility in the arrangement of interior equipment of the vehicle. For example, if the panel is used as a floor panel, a seat stud may be attached anywhere within the grid. That is, the seat stud may therefore be positioned freely. In addition, the respective cavity of the plurality of attachment sockets is formed into the inner of the panel so that a counter element attached to the at least one bearing surface may be retained in the cavity in a form-fitting manner, in particular in the plane of the plurality of attachment sockets. Further, since the core, i.e. the plurality of attachment sockets with the respective cavity, is directly formed on at least one of the first layer and the second layer, the panel can be easily manufactured. The layered structure of the panel is thus particularly simple, in particular when compared to other sandwich structures and/or honeycombs. In other words, a bending stiff, i.e. rigid, and structurally simple, and therefore easy to manufacture, panel with a plurality of load introduction interfaces is provided.

As used herein, the first layer and/or the second layer may be solid components or parts. For example, they may be provided and/or made from a sheet material, a plastic material, a composite material, or the like. The first layer and the second layer may be arranged on top of each other. For example, they may be coupled to each other by one or more ridges, ribs, or the like, extending therebetween. Alternatively or additionally, they may be coupled to each other via one or more of the respective cavities of the plurality of attachment sockets. In the intended use of the panel, one of the first layer and the second layer may form an exterior and/or visible side of the panel, and the other of the first layer and the second layer may form an interior side. Accordingly, one of the first layer and the second layer may face the interior of the vehicle. In at least some embodiments, the one of the first layer and the second layer comprising the plurality of attachment sockets may face the interior of the vehicle. Accordingly, the plurality of attachment sockets may face the interior of the vehicle. In at least some embodiments, the first layer and the second layer may be formed similarly or may be identical parts. Alternatively, the first layer and the second layer may be formed different.

The respective cavity of the plurality of attachment sockets may have different cross-sections and/or body shapes. For example, these may be at least substantially round, at least substantially spherical, angular, polygonal, or the like. A wide range of cross-sections and/or body shapes are possible, if they are suitable for forming a stable core of the panel, which may be determined, for example, by calculation, modeling, simulation, testing, or the like. Merely by way of example, the cavity may have an at least substantially and/or partial spherical form or shape, thereby forming a bubble core. In another example, the cavity may have a polygonal form or shape, e.g. a truncated pyramid or the like, thereby forming a rectangular core. In at least some embodiments, the respective cavity of the plurality of attachment sockets may open to the interior of the vehicle, and may be configured, particularly by its at least one bearing surface, to at least partially receive a counter element, counter structure, an interior equipment, such as a seat stud, a carpet trim, or the like.

The panel may be configured to attach and/or fasten a plurality of counter elements, counter structures, interior equipment of the vehicle, or the like, via the plurality of attachment sockets. Further, the panel may serve at the same time or instead as a cladding part or the like. For example, the panel may be configured and/or may be used as a floor panel or part thereof, a wall cladding panel or part thereof, and/or a ceiling cladding panel or part thereof. In case of a floor panel, the panel may be configured to attach one or more seat studs to the panel, thereby at least partially replacing a seat rail system, a carpet trim, or the like.

According to an embodiment, the other one of the first layer and the second layer may be arranged to contact a bottom section of a respective cavity of at least part of the plurality of attachment sockets. For example, only one of the first layer and the second layer may have the plurality of attachment sockets formed thereon, while the other of the first layer and the second layer is provided in a plate-like or sheet-like shape. The other of the first layer and the second layer may then contact the bottom portion of at least a part of the plurality of attachment sockets. This provides a sandwich-like or honeycomb-like layered structure with a high bending stiffness.

In an embodiment, there may be formed a first plurality of attachment sockets in the first layer and a second plurality of attachment sockets in the second layer. The first plurality of attachment sockets and the second plurality of attachment sockets may be directed away from each other. In other words, each of the first layer and the second layer may have a plurality of attachment sockets and a plurality of cavities, respectively. This gives the panel even more cavities that may serve as the core of the panel. This provides a double-core structure. Likewise, attachment sockets are formed on both opposing surfaces of the panel. In other words, the panel may thus have a double-sided attachment structure, i.e. the first and second pluralities of attachment sockets. The cavities may be arranged opposite to each other. They may also be interconnected, open into each other, etc. The first layer and the second layer may be formed similarly or may be identical parts.

According to an embodiment, the first plurality of attachment sockets and the second plurality of attachment sockets may be in a one-to-one correspondence. Respective bottom sections of the cavities of the first plurality of attachment sockets and the second plurality of attachment sockets may face and/or contact each other. In other words, the first layer and the second layer may have the same number of attachment sockets. The first plurality of attachment sockets and the second plurality of attachment sockets may open in directions facing away from each other. The respective bottom sections of two opposing cavities may also be interconnected, open into each other, etc.

In an embodiment, the first layer and the second layer may be coupled to each other in respective bottom sections of the cavities of the first plurality of attachment sockets and the second plurality of attachment sockets. This coupling of two opposing cavities may also be achieved, for example, by means of a coupling interface, which may also serve to attach a counter element, a counter structure, or the like, in the corresponding attachment socket. For example, the coupling may be implemented by a welded connection, an electrical interface with electrical contacts, a form-fit connection, a bushing, a threaded insert, a rotary nut, a feedthrough, or the like. This makes the panel particularly multifunctional.

According to an embodiment, at least one of the plurality of attachment sockets may comprise at least one coupling interface arranged in the respective cavity and configured to couple thereto a counter element. The counter element may also include a counter structure, equipment of the interior of the vehicle, or the like. The at least one coupling interface may be configured as an electrical interface with electrical contacts, a form-fit connection, a bushing, a threaded insert, nut or the like, a rotary nut, a feedthrough, or the like. For example, the at least one coupling interface may be configured to attach the counter element, counter structure, or the like, to the panel when being arranged in the respective cavity and/or on the bearing surface. For example, the counter element, etc. may comprise a seat stud, a carpet trim, or the like. In addition, the at least one coupling interface may be configured to couple the panel to another structure of the vehicle, such as a reinforcement structure, or the like. In other words, the panel may be attached to the vehicle or a part thereof via the at least one coupling interface. Accordingly, the at least one coupling interface may be configured to attach and/or fasten thereto a counter element, etc., placed and/or received in the respective attachment socket, for example, attached on the at least one bearing surface. Alternatively or additionally, the at least one coupling interface may be configured for attaching and/or fastening the panel to another structure of the vehicle. For example, if the panel is used as a floor panel one or more of the attachment sockets may be used to attach and/or fasten the panel to a to a corresponding supporting structure of the vehicle, and one or more, e.g. others, of the attachment sockets may be used to attach and/or fasten e.g. a seat stud, a carpet trim, or the like, to the panel.

In an embodiment, in the first layer a first plurality of attachment sockets and in the second layer a second plurality of attachment sockets may be formed. The at least one coupling interface may arranged in or over two cavities, coupled to each other, of the first plurality of attachment sockets and the second plurality of attachment sockets. The at least one coupling interface may be accessible via two respective attachment sockets directed and/or facing away from each other. That is, if both the first layer and the second layer comprise a respective plurality of attachment sockets, the at least one coupling interface may be accessible from both panel surfaces. The at least one coupling interface may be arranged in a transition between two bottom sections of the respective cavities facing each other.

According to an embodiment, the at least one coupling interface may be configured to couple the first layer and the second layer to each other. For example, the first layer and second layer may be coupled to each other by coupling the respective bottom sections of two opposing cavities with each other via the at least one coupling interface. For example, a material connection, e.g. a welded connection, may be made in which the corresponding coupling interface is formed and/or integrated. By way of example, a flow drilling process may be used to couple the first interface and the second interface to each other, while at the same time arranging and/or forming, for example, an insert, such as a snap fastener, a screw element, a threaded element, or the like. The at least one coupling interface may be accessible from both surfaces of the panel and/or via both layers.

In an embodiment, the at least one coupling interface may be configured as a fastening interface. For example, it may be formed as a clamp, thread, screw element, form-fit part, snap-fit part, bushing, rotary nut, feedthrough, or the like. As described herein, the at least one coupling interface may be configured to attach and/or fasten thereto a counter element, etc., placed and/or received in the respective attachment socket, for example, attached on the at least one bearing surface. Alternatively or additionally, the at least one coupling interface may be configured for attaching and/or fastening the panel to another structure of the vehicle. For example, if the panel is used as a floor panel one or more of the attachment sockets may be used to attach and/or fasten the panel to a to a corresponding supporting structure of the vehicle, and one or more, e.g. others, of the attachment sockets may be used to attach and/or fasten e.g. a seat stud, a carpet trim, or the like, to the panel.

According to an embodiment, the at least one coupling interface may be configured as an electrical interface. Thus, the respective attachment socket may serve as a kind of power socket, network socket, or the like. The counter element to be attached to it may have a correspondingly configured counter connection.

In an embodiment, multiple different types of coupling interfaces may be configured in the plurality of attachment sockets. For example, a first type of the at least one coupling interface of at least a first attachment socket of the plurality of attachment sockets may be different to at least a second attachment socket of the plurality of attachment sockets. For example, if the panel is to be used as a floor panel, some of the attachment sockets may be configured to attach seat studs, and some others of the attachment sockets may be configured to attach a carpet trim, for which purposes different coupling interfaces may be provided. Alternatively or additionally, for example, an electrical interface may also be provided in between in order to provide a power socket or the like at desired locations. The two-dimensional grid pattern may be freely configured in this respect.

According to an embodiment, the at least one of the first layer and the second layer comprising the plurality of attachment sockets may be a deep drawn part, a thermoformed part, or a compression molding part. These manufacturing processes require only simple tools and little work and/or material. Thus, the core of the panel, which substantially comprises the cavities, i.e., shaped bodies, may be formed directly at and/or on at least one of the first layer and the second layer.

According to a second aspect, there is provided a method for providing a panel for an interior of a vehicle. The method comprises coupling a first component forming a first layer with a second component forming a second layer to each other. A plurality of attachment sockets is formed in a two-dimensional grid pattern in at least one of the first layer and the second layer, the plurality of attachment sockets each comprising a cavity open to an outer side of the respective layer and extending into a space between the first layer and the second layer, the cavity comprising at least one bearing surface.

The method may be used for providing the panel according to the first aspect. Accordingly, the method may be modified in accordance with the embodiments of the first aspect.

The method allows easy manufacturing of the panel, since a core structure with high bending stiffness is provided by forming the core forming cavities directly on at least one of the first layer and the second layer. Thus, a simple primary forming or reforming process can be used to produce a sandwich-like and/or honeycomb-like structure, which requires little work and material input. Further, the method allows to provide the panel with integrated attachment sockets, which, however, are formed together with the cavities with at least one bearing surface.

For example, the plurality of attachment sockets may be formed by deep drawing, thermoforming, compression molding, or the like. These manufacturing processes require only simple tools and little work and/or material. Thus, the core of the panel, which substantially comprises the cavities, i.e., shaped bodies, may be formed directly at and/or on at least one of the first layer and the second layer.

According to a third aspect, there is provided a system for an interior of a vehicle. The system comprises a panel according to the first aspect and/or manufactured by using the method according to the second aspect. Further, the system comprises at least one counter element configured to be coupled to the panel via at least one of the plurality of attachment sockets.

For example, the at least one counter element may be any element to be attached to the panel. By way of example, if the panel is used as a floor panel the at least one counter element may be a seat stud, a carpet trim, or the like. In at least some embodiments, the counter element may be coupled, e.g. attached, fastened, or the like, to the floor panel via the at least one coupling interface. The at least one counter element, which may also be referred to as a counter structure or the like, may comprise a counter surface matching the bearing surface of the plurality of attachment sockets of the panel. When being attached to the respective attachment socket, it may be coupled, e.g. fastened, in the attachment socket via the at least one coupling interface. However, it should be noted that in at least some applications, a form fit provided between the attachment socket and counter element may provide sufficient support, for example, when a carpet trim with a corresponding attachment element, fixing element, or the like is inserted into the attachment socket.

According to a fourth aspect, there is provided a vehicle comprising at least one panel according to the first aspect and/or provided by using the method of the second aspect, and/or comprising a system according to the third aspect. The at least one panel is installed in an interior of the vehicle.

For example, the vehicle may be any kind of vehicle, such as a rail vehicle, an aircraft, spacecraft, a motor vehicle, or the like. The panel may be configured and/or used, for example, as a floor panel or part thereof, a wall cladding panel or part thereof, and/or a ceiling cladding panel or part thereof.

The invention will be explained in greater detail with reference to exemplary embodiments depicted in the drawings as appended.

### BRIEF SUMMARY OF THE DRAWINGS

The present invention is explained in more detail below with reference to the embodiments shown in the schematic figures:
- Fig. 1: illustrates in a perspective view an exemplary panel according to an embodiment.
- Fig. 2: illustrates the exemplary panel of Fig. 1 in a top view.
- Fig. 3: illustrates the exemplary panel of Fig. 1 and Fig. 2 in a side view.
- Fig. 4: illustrates in a top view an exemplary panel according to an embodiment.
- Fig. 5: illustrates the exemplary panel of Fig. 4 in a side view.
- Fig. 6: illustrates in a perspective view an exemplary panel according to an embodiment.
- Fig. 7: illustrates the exemplary panel of Fig. 6 in a side view.
- Fig. 8: illustrates in a perspective view an exemplary panel according to an embodiment.
- Fig. 9: illustrates the exemplary panel of Fig. 8 in a side view.
- Fig. 10: illustrates an aircraft as an exemplary vehicle having installed a panel according to an embodiment.

In the figures of the drawing, elements, features and components which are identical, functionally identical and of identical action are denoted in each case by the same reference designations unless stated otherwise.

### DESCRIPTION OF EXEMPLARY EMBODIMENTS

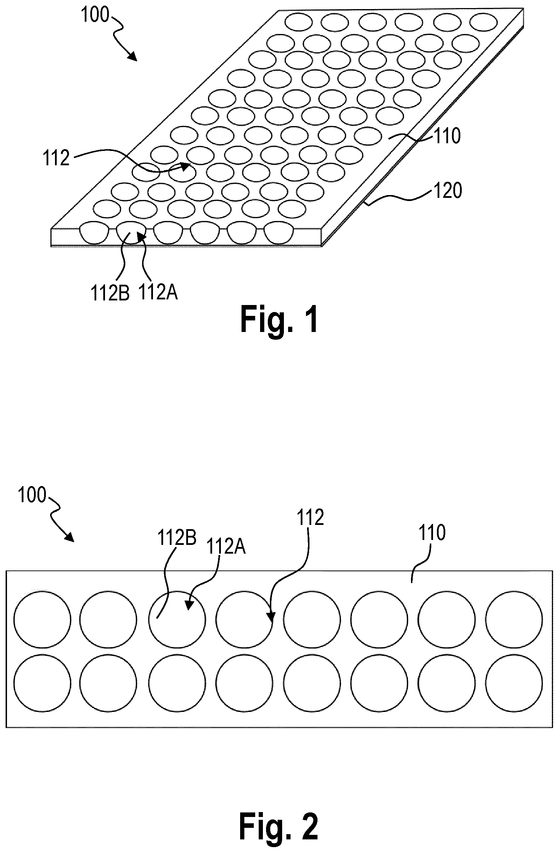

Fig. 1 illustrates in a schematic perspective view an exemplary panel 100 according to an embodiment. For better illustration, the panel 100 in Fig. 1 is cut off or open at one lateral side. The panel 100 may be used in a vehicle, for example, as a part of a floor panel, a wall cladding panel, a ceiling cladding panel, or the like.

The panel comprises a first layer 110 and a second layer 120 coupled to each other. The first layer 110 and the second layer 120 are arranged on top of each other. At least one of the first layer 110 and the second layer 120 comprises a plurality of attachment sockets, wherein, in this embodiment, the first layer 110 comprises a first plurality of attachment sockets 112. In the first layer 110, the first plurality of attachment sockets 112 is formed in a two-dimensional grid pattern. Each of the first plurality of attachment sockets 112 comprises a cavity 112A open to an outer side of the first layer 110, wherein in Fig. 1 the cavities 112A are open to the top. Further, each cavity 112A of the first plurality of attachment sockets 112 extends into a space between the first layer 110 and the second layer 120. In other words, the cavities 112A extend into a thickness direction of the panel 100. In addition, each cavity 112A of the first plurality of attachment sockets 112 comprises at least one bearing surface 112B. The second layer 120 is arranged to cover the back of the first layer 110, wherein in Fig. 1 this is the bottom side. The second layer 120 is arranged to contact a bottom section of a respective cavity 112A of at least part of the first plurality of attachment sockets 112.

The first plurality of attachment sockets 112 may be configured to attach a counter element thereto. At least in the plane of the first layer 110, the first plurality of attachment sockets 112 may provide a form-fit connection with a counter element, counter structure, or the like positioned therein. For example, if the panel 100 is used as a floor panel, one or more of the first plurality of attachment sockets 112 may have attached thereto corresponding mating attachment means of a carpet trim, or with a further coupling interface, also a seat stud, or the like. In another example, if the panel 100 is used as a wall cladding panel, one or more of the first plurality of attachment sockets 112 may have attached thereto corresponding mating attachment means of a curtain, or the like. In principle, any counter element whose attachment means and/or shape is adapted to the respective attachment socket may be attached to it, so that this is not limited herein.

It is noted that the first plurality of attachment sockets 112 is integrally formed with the material of the first layer 110. For example, at least the first layer 110 is formed by a deep drawn process, a thermoformed process, a compression moulding process, or any other suitable forming process in which such cavities may be formed. Further, in this embodiment, the second layer 120 is formed plate-like or sheet-like.

Fig. 2 shows the panel 100, or more specifically a part thereof, in a schematic top view. In the first layer 110, the first plurality of attachment sockets 112 is formed in a two-dimensional grid pattern. It should be noted that the grid pattern shown is merely exemplary and may be designed differently. In any case, the two-dimensionally arranged first plurality of attachment sockets 112 provides flexibility in arranging and/or attaching a counter element to the panel 100.

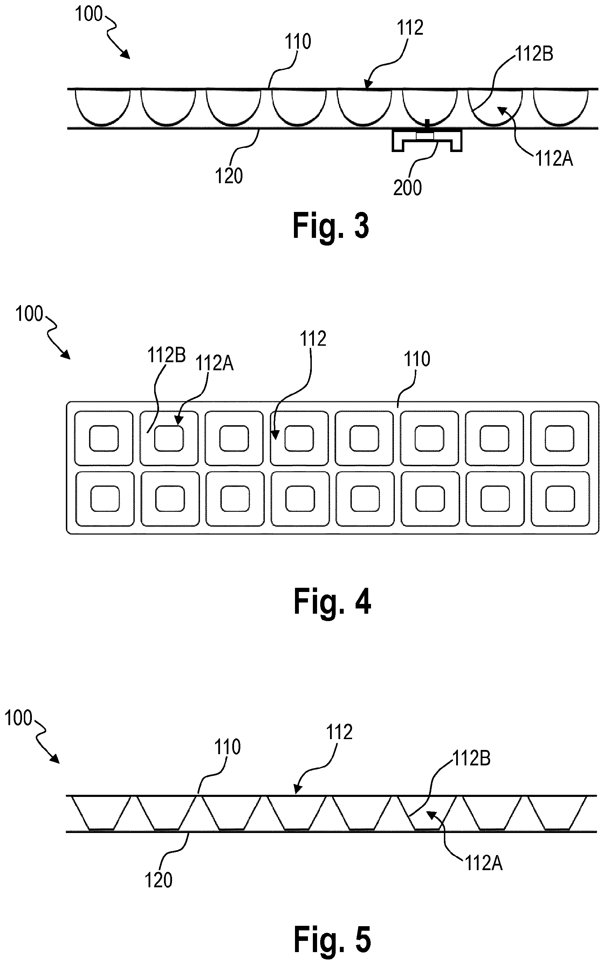

Fig. 3 shows the panel 100, or more specifically a part thereof, in a schematic side view. Each of the first plurality of attachment sockets 112 comprises a cavity 112A open to an outer side of the first layer 110, wherein in Fig. 3 the cavities 112A are open to the top. Further, each cavity 112A of the first plurality of attachment sockets 112 extends into a space between the first layer 110 and the second layer 120.

In other words, the cavities 112A extend into a thickness direction of the panel 100. The second layer 120 is arranged to cover the back of the first layer 110, wherein in Fig. 3 this is the bottom side. The second layer 120 is arranged to contact a bottom section of a respective cavity 112A of at least part of the first plurality of attachment sockets 112. Further, Fig. 3 illustrates an exemplary support structure 200 of the vehicle via which the panel 100 may be attached and/or fastened to the vehicle.

Figs. 1 to 3 illustrate an exemplary shape of the cavities of the first plurality of attachment sockets 112, wherein they are substantially spherical or shaped as a spherical section. It is noted that the respective cavity 112A of the first plurality of attachment sockets 112 may have different cross-sections and/or body shapes. For example, these may be at least substantially round, at least substantially spherical, angular, polygonal, or the like.

Figs. 4 and 5 illustrate another exemplary shape of the cavities of the first plurality of attachment sockets 112, wherein in this example they are polygonal. For example, this may form a truncated pyramid-like body. It is noted, however, that this example merely serves for better illustration. Other cross-sections and/or body shapes are possible.

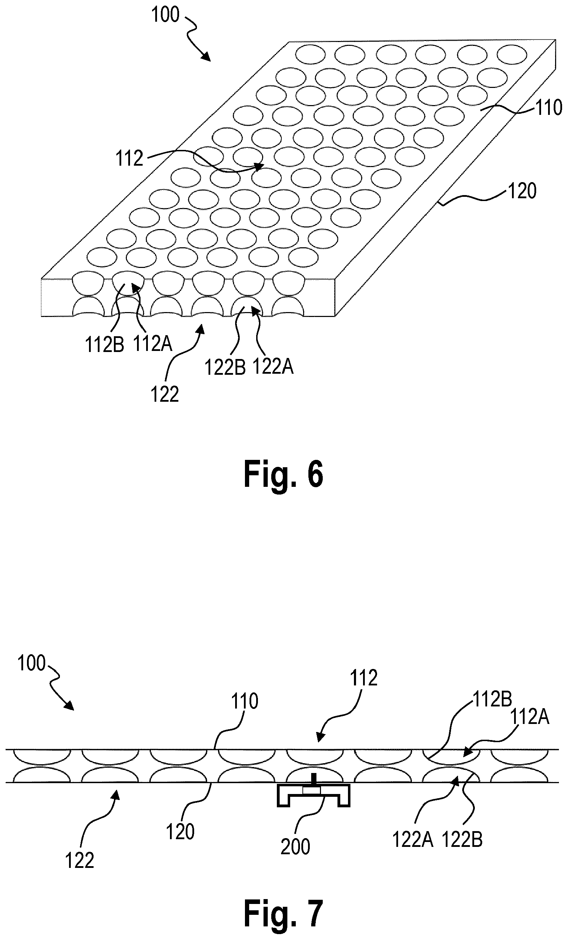

Fig. 6 illustrates in a schematic perspective view another embodiment of the panel 100. The basic principle of this embodiment is the same as the panel 100 described above. Accordingly, the features of the embodiments may also be combined, provided that they do not contradict each other.

The panel 100 of this embodiment differs from the above in that both the first layer 110 and the second layer 120 are formed with respective pluralities of attachment sockets 112 and 122. Optionally, the panel 100 of this embodiment may also be regarded in that the second layer 120 described above has been replaced by a second first layer 110. Accordingly, the first layer 110 and the second layer 120 may also be identical components or parts.

Accordingly, here, the first layer 110 comprises the first plurality of attachment sockets 112 as described above.

Deviating from the above, the second layer 120 of this embodiment also comprises a further, second plurality of attachment sockets 122. In the second layer 120, the second plurality of attachment sockets 122 is formed in a two-dimensional grid pattern. Each of the second plurality of attachment sockets 122 comprises a cavity 122A open to an outer side of the first layer 120, wherein in Fig. 6 the cavities 112A are open to the bottom. Further, each cavity 122A of the second plurality of attachment sockets 122 extends into a space between the first layer 110 and the second layer 120. In other words, the cavities 122A extend into a thickness direction of the panel 100. In addition, each cavity 122A of the second plurality of attachment sockets 122 comprises at least one bearing surface 122B. The first plurality of attachment sockets 112 and the second plurality of attachment sockets 122 are directed or face away from each other.

For example, the first plurality of attachment sockets 112 and the second plurality of attachment sockets 122 are in a one-to-one correspondence. Respective bottom sections of the cavities 112A, 122A of the first plurality of attachment sockets 112 and the second plurality of attachment sockets 122 face and/or contact each other.

In at least some embodiments, the first layer 110 and the second layer 120 may be coupled to each other in respective bottom sections of the cavities 112A, 122A of the first plurality of attachment sockets 112 and the second plurality of attachment sockets 122.

Fig. 7 shows the panel 100, or more specifically a part thereof, in a schematic side view. Each of the first plurality of attachment sockets 112 and second plurality of attachment sockets 122 comprises a respective cavity 112A, 122A open to an outer side of the respective first layer 110 or second layer 120, so that there are attachment sockets at both surface sides of the panel 100. Further, each cavity 112A, 122A extends into a space between the first layer 110 and the second layer 120. In other words, the respective cavities 112A, 112B extend into a thickness direction of the panel 100. Respective bottom sections of the cavities 112A, 122A of the first plurality of attachment sockets 112 and the second plurality of attachment sockets 122 face and/or contact each other. In at least some embodiments, the first layer 110 and the second layer 120 may be coupled to each other in respective bottom sections of the cavities 112A, 122A of the first plurality of attachment sockets 112 and the second plurality of attachment sockets 122. Further, Fig. 7 illustrates the exemplary support structure 200 of the vehicle via which the panel 100 may be attached and/or fastened to the vehicle.

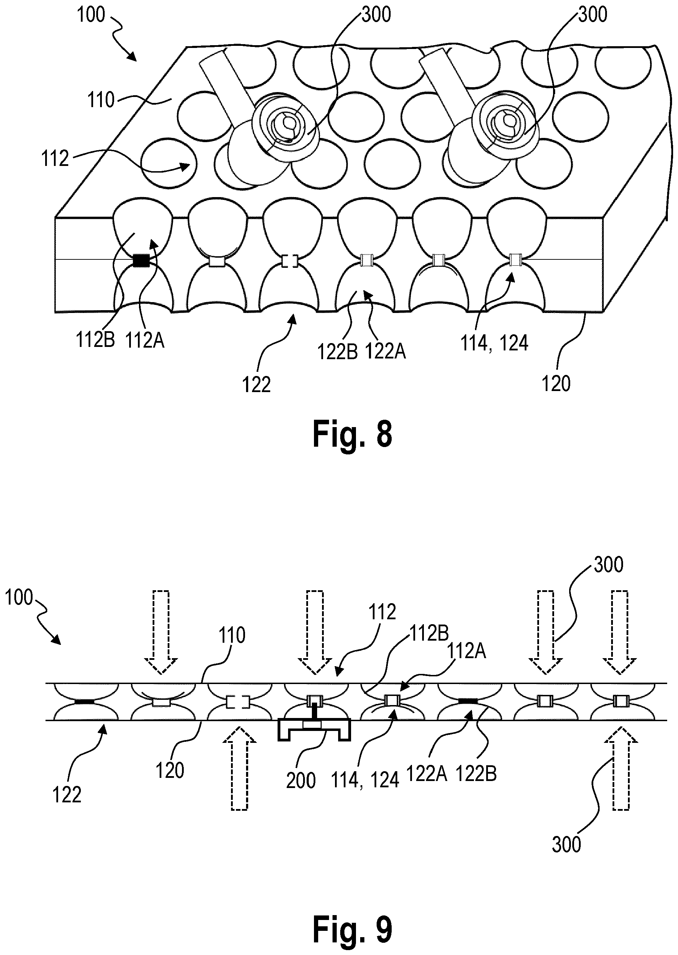

Fig. 8 illustrates in a schematic perspective view another embodiment of the panel 100. For better illustration, the panel 100 in Fig. 8 is cut off or open at one lateral side. The basic principle of this panel 100 is the same as the panel described above. Accordingly, the features of the embodiments may also be combined, provided that they do not contradict each other.

In the panel 100, at least one of the plurality of attachment sockets 112, 122 comprises at least one coupling interface 114, 124 arranged in the respective cavity 112A, 122A and configured to couple thereto a counter element 300. Merely by way of example, the counter element 300 is a seat stud of which two are shown here as examples. The counter element 300 may have a counter bearing surface corresponding to the bearing surface 112B, 122B of the first and/or second plurality of attachment sockets 112, 122. It is noted that also the panel 100 according to the embodiment of Figs. 1 to 3 may comprise such at least one coupling interface 114 arranged in the respective cavity 112A.

Still referring to Fig. 8, it is noted that Fig. 8 exemplarily illustrates different types of coupling interfaces 114, 124, without intending to limit the type to the types illustrated. For example, the at least one coupling interface 114, 124 may be configured as a fastening interface. By way of example, it may be formed as a clamp, thread, a screw element, a form-fit part, a snap-fit part, a bushing, a rotary nut, feedthrough, or the like. The at least one coupling interface 114, 124 may be configured to attach and/or fasten thereto the counter element 300, etc., placed and/or received in the respective attachment socket, for example, attached on the at least one bearing surface 112B, 122B. Alternatively or additionally, the at least one coupling interface 114, 124 may be configured for attaching and/or fastening the panel 100 to another structure of the vehicle, i.e. to the above structure 200. Further, the at least one coupling interface 114, 124 may be configured as an electrical interface.

It is noted that the respective at least one interface 114, 124 may be common to two opposing cavities 112A, 122A. The two reference signs 114, 124 then only indicate here that the coupling interface 114, 124 is accessible from both surface sides of the panel 100. For example, the at least one coupling interface 112, 122 may be arranged in or over two cavities 112A, 122A, coupled to each other, of the first plurality of attachment sockets 112 and the second plurality of attachment sockets 122. Accordingly, the respective at least one coupling interface 114, 124 may be accessible via two respective attachment sockets directed away from each other, i.e. via two opposing attachment sockets 112, 122 and/or from both surface sides of the panel 100. Further, by way of example, the at least one coupling interface 114, 124 may be configured to couple the first layer 110 and the second layer 120 to each other.

In the example that merely serves for better illustration, the counter element 300, e.g. the seat stud, may have a corresponding attachment and/or fastening means or mechanism (not shown), configured to be coupled, e.g. fastened, to the at least one coupling interface 114, 124. For example, the counter element 300 may comprise, a clamp part, a screw element, a form-fit part, a snap-fit part, a locking pin, or the like, configured to engage with the at least one coupling interface 114, 124, or any other suitable attachment and/or fastening means.

Fig. 9 illustrates the exemplary panel 100 of Fig. 8, or more specifically a part thereof, in a schematic side view. By reference to arrows, each of which designates a counter element 300 and/or a counter structure 200, or the like, it is indicated that the entire two-dimensional grid pattern of the first and/or second plurality of attachment sockets 112, 122 may be utilized to attach and/or fasten corresponding counter elements and/or counter structures 200, 300, thereto. It is noted that multiple different types of coupling interfaces are configured in the first and/or second plurality of attachment sockets 112, 122.

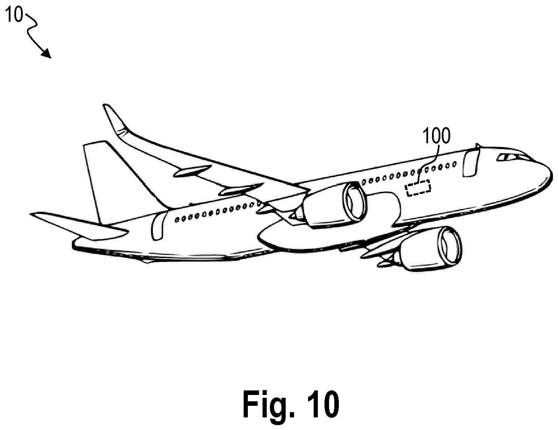

Fig. 10 illustrates an aircraft as an exemplary vehicle 10 having installed the panel 100 described herein. For example, the panel 100 may be used in the vehicle 10, for example, as a part of a floor panel, a wall cladding panel, a ceiling cladding panel, or the like. The above counter element and/or counter structure 200, 300 may be coupled to the panel 100 via at least one of the first and/or second plurality of attachment sockets 112, 122. It is noted that different attachment sockets 112, 122 may have integrated different coupling interfaces 114, 124. Likewise, different types of counter elements and/or counter structures 200, 300 may be attached to different attachment sockets 112, 122 and/or coupled to different coupling interfaces 114, 124. For example, in case of a floor panel, one or more attachment sockets 114, 124 may be used to attach a seat stud to the panel 100 and one or more other attachment sockets 114, 124 may be used to attach a carpet trim of the floor.

A method for providing and/or manufacturing the panel 100 may comprise coupling a first component forming the first layer 110 with a second component forming the second layer 120 to each other. Thereby, the plurality of attachment sockets 112, 122 is formed in a two-dimensional grid pattern in at least one of the first layer 110 and the second layer 120. The plurality of attachment sockets 112, 122 each comprises a cavity 112A, 122A that opens to an outer side of the respective layer 110, 120 and extends into a space between the first layer 110 and the second layer 120. The cavity 112A, 122A comprises the at least one bearing surface 112, 122B.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification. The embodiments were chosen and described in order to best explain the principles of the invention and its practical applications, to thereby enable others skilled in the art to best utilize the invention and various embodiments with various modifications as are suited to the particular use contemplated.

### LIST OF REFERENCE SIGNS

- 10: vehicle (e.g. aircraft)
- 100: panel
- 110: first layer
- 112: first plurality of attachment sockets
- 112A: cavity
- 112B: bearing surface
- 120: second layer
- 122: second plurality of attachment sockets
- 122A: cavity
- 122B: bearing surface
- 200: counter element and/or counter structure
- 300: counter element and/or counter structure

## Claims

1. A panel (100) for an interior of a vehicle (10), comprising:
a first layer (110) and a second layer (120) coupled to each other;
wherein a plurality of attachment sockets (112, 122) is formed in a two-dimensional grid pattern in at least one of the first layer (110) and the second layer (120), the plurality of attachment sockets (112, 122) each comprising a cavity (112A, 122A) open to an outer side of the respective layer (110, 120) and extending into a space between the first layer (110) and the second layer (120), the cavity (112A, 122A) comprising at least one bearing surface (112B, 122B).

2. The panel of claim 1, wherein the other one of the first layer (110) and the second layer (120) is arranged to contact a bottom section of a respective cavity (112A, 122A) of at least part of the plurality of attachment sockets (112, 122).

3. The panel of claim 1 or 2, wherein in the first layer (110) a first plurality of attachment sockets (112) and in the second layer (120) a second plurality of attachment sockets (122) is formed, and the first plurality of attachment sockets (112) and the second plurality of attachment sockets (122) are directed away from each other.

4. The panel of claim 3, wherein the first plurality of attachment sockets (112) and the second plurality of attachment sockets (122) are in a one-to-one correspondence, and respective bottom sections of the cavities (112A, 122A) of the first plurality of attachment sockets (112) and the second plurality of attachment sockets (122) face and/or contact each other.

5. The panel of claim 3 or 4, wherein the first layer (110) and the second layer (120) are coupled to each other in respective bottom sections of the cavities (112A, 122A) of the first plurality of attachment sockets (112) and the second plurality of attachment sockets (122).

6. The panel of any one of the preceding claims, wherein at least one of the plurality of attachment sockets (112, 122) comprises at least one coupling interface (114, 124) arranged in the respective cavity and configured to couple thereto a counter element (200, 300).

7. The panel of claim 6, wherein in the first layer (110) a first plurality of attachment sockets (112) and in the second layer (120) a second plurality of attachment sockets (122) is formed, and the at least one coupling interface (114, 124) is arranged in or over two cavities, coupled to each other, of the first plurality of attachment sockets and the second plurality of attachment sockets, and is accessible via two respective attachment sockets (112, 122) directed away from each other.

8. The panel of claim 7, wherein the at least one coupling interface is configured to couple the first layer (110) and the second layer (120) to each other.

9. The panel of any one of claims 6 to 8, wherein at least one coupling interface (114, 124) is configured as a fastening interface.

10. The panel of any one of claims 6 to 9, wherein the at least one coupling interface (114, 124) is configured as an electrical interface.

11. The panel of any one of claims 6 to 10, wherein multiple different types of coupling interfaces (114, 124) are configured in the plurality of attachment sockets (112, 122).

12. The panel of any one of the preceding claims, wherein the at least one of the first layer (110) and the second layer (120) comprising the plurality of attachment sockets (112, 122) is a deep drawn part, a thermoformed part, or a compression molding part.

13. A method for providing a panel (100) for an interior of a vehicle (10), the method comprising:
coupling a first component forming a first layer (110) with a second component forming a second layer (120) to each other;
wherein a plurality of attachment sockets (112, 122) is formed in a two-dimensional grid pattern in at least one of the first layer (110) and the second layer (120), the plurality of attachment sockets (112, 122) each comprising a cavity (112A, 122A) open to an outer side of the respective layer (110, 120) and extending into a space between the first layer (110) and the second layer (120), the cavity (112A, 122A) comprising at least one bearing surface (112B, 122B).

14. A system for an interior of a vehicle, comprising:
a panel (100) according to any one of the preceding claims; and
a counter element (200) configured to be coupled to the panel (100) via at least one of the plurality of attachment sockets (112, 122).

15. A vehicle (10), comprising at least one panel (100) according to any one of claims 1 to 12, and/or comprising a system according to claim 14, installed in an interior of the vehicle (10).
